# DEMANDE DE BREVET EUROPEEN

(11) **EP 4 195 672 A1**
(43) Date de publication de la demande: **14.06.2023**
(21) Numéro de dépôt: 22212625.2
(22) Date de dépôt: 09.12.2022
(51) Int. Cl.: H04N 21/422, H04N 21/4363, H04N 21/41, G06F 3/16, G10L 15/22

(54) **DETECTION DE L'ETAT D'UN TELEVISEUR**

(30) Priorité: 13.12.2021 FR 2113399
(71) Demandeur: SAGEMCOM BROADBAND SAS, 92500 Rueil-Malmaison (FR)
(72) Inventeur: ATZEL, Loïg, 92500 RUEIL MALMAISON (FR); GALLET, Marc, 92500 RUEIL MALMAISON (FR)
(74) Mandataire: Lavaud, Thomas

(57) **Abrégé**

Procédé de détection, réalisé préalablement à la mise en œuvre d'une fonction de reconnaissance vocale sur un signal vocal prononcé par un utilisateur et capturé par un boîtier décodeur (1),
le procédé de détection comprenant les étapes de :
- vérifier que le téléviseur (2) est allumé et, si ce n'est pas le cas, produire une première commande pour allumer le téléviseur ;
- vérifier que le boîtier décodeur (1) est une source HDMI active du téléviseur et, si ce n'est pas le cas, produire une deuxième commande pour que le boîtier décodeur devienne la source HDMI active du téléviseur ;
- lorsque le téléviseur est allumé et que le boîtier décodeur est la source HDMI active du téléviseur, produire une requête pour démarrer la fonction de reconnaissance vocale.

## Description

L'invention concerne le domaine des boîtiers décodeurs et de la reconnaissance vocale.

### ARRIERE PLAN DE L'INVENTION

Certains équipements électroniques récents comprennent des microphones et peuvent être utilisés pour mettre en œuvre (au moins partiellement) la fonction de reconnaissance vocale d'un assistant personnel virtuel.

Un tel équipement électronique comprend alors classiquement un module de détection. Le module de détection acquiert un signal audio, qui est produit par les microphones à partir d'un signal sonore capturé. Lorsque le module de détection de l'équipement électronique détecte qu'un mot-clef, destiné à activer la fonction de reconnaissance vocale, a été prononcé par un utilisateur, le signal audio produit par les microphones est transmis à un module de reconnaissance vocale. La fonction de reconnaissance vocale est alors mise en œuvre par le module de reconnaissance vocale qui analyse le signal audio et détecte les commandes vocales émises par l'utilisateur. L'équipement électronique effectue alors les actions correspondant aux commandes vocales.

Le module de reconnaissance vocale peut être intégré localement dans l'équipement électronique ou bien peut être déporté dans un ou des équipements externes distincts de l'équipement électronique, par exemple dans un ou des serveurs distants (sur le *cloud*). Dans cette dernière configuration, le signal audio produit par les microphones est transmis par l'équipement électronique au module de reconnaissance vocale via Internet (éventuellement après avoir subi des traitements dans l'équipement électronique, tels qu'une annulation d'écho), et les commandes vocales sont transmises par le module de reconnaissance vocale à l'équipement électronique.

Généralement, un équipement électronique qui met en œuvre une telle fonction de reconnaissance vocale dispose d'un ou de plusieurs haut-parleurs permettant un retour utilisateur (retour vocal) vers l'utilisateur afin de le guider en cas d'anomalie dans l'interprétation des commandes vocales.

On envisage de mettre en œuvre une fonction de reconnaissance vocale dans un boîtier décodeur (ou STB, pour *Set-Top Box*). Or, la plupart des boîtier décodeurs n'intègrent pas de haut-parleur, ce qui empêche la mise en œuvre de ce retour utilisateur.

### OBJET DE L'INVENTION

L'invention a pour objet de fournir un retour utilisateur pour une fonction de reconnaissance vocale mise en œuvre au moins partiellement dans un boîtier décodeur n'intégrant pas de haut-parleur.

### RESUME DE L'INVENTION

En vue de la réalisation de ce but, on propose un procédé de détection, mis en œuvre dans un boîtier décodeur comprenant un port HDMI connecté via un câble HDMI à un téléviseur, le procédé de détection étant réalisé préalablement à la mise en œuvre d'une fonction de reconnaissance vocale sur un signal vocal prononcé par un utilisateur et capturé par le boîtier décodeur,
le procédé de détection comprenant les étapes de :
- vérifier que le téléviseur est allumé et, si ce n'est pas le cas, produire une première commande pour allumer le téléviseur ;
- vérifier que le boîtier décodeur est une source HDMI active du téléviseur et, si ce n'est pas le cas, produire une deuxième commande pour que le boîtier décodeur devienne la source HDMI active du téléviseur ;
- lorsque le téléviseur est allumé et que le boîtier décodeur est la source HDMI active du téléviseur, produire une requête pour démarrer la fonction de reconnaissance vocale.

Pour pallier l'absence de haut-parleur dans le boîtier décodeur, le téléviseur est donc être utilisé pour fournir un retour utilisateur (visuel ou sonore) lors de la mise en œuvre d'une fonction de reconnaissance vocale.

Le boîtier décodeur vérifie donc si le téléviseur est allumé et si le boîtier décodeur est bien la source HDMI active du téléviseur - et, si l'une ou les deux conditions ne sont pas réunies, produit la première commande et/ou la deuxième commande.

Le boîtier décodeur détermine donc automatiquement et de manière autonome si le retour utilisateur est disponible et, si c'est le cas, déclenche la fonction de reconnaissance vocale.

On propose de plus un procédé de détection tel que précédemment décrit, comprenant en outre les étapes de vérifier que le téléviseur est compatible avec un protocole CEC et, si c'est le cas, d'utiliser le protocole CEC pour vérifier que le téléviseur est allumé et que le boîtier décodeur est la source HDMI active du téléviseur, et, si nécessaire, pour produire la première commande et/ou la deuxième commande.

On propose de plus un procédé de détection tel que précédemment décrit, comprenant l'étape, pour vérifier que le téléviseur est allumé, d'utiliser un signal HPD, puis un signal RXSense et/ou un signal généré par un protocole HDCP.

On propose de plus un procédé de détection tel que précédemment décrit, comprenant les étapes, pour vérifier que le boîtier décodeur est la source HDMI active du téléviseur, de :
- émettre via le port HDMI un signal audio émis comprenant un signal de test ;
- acquérir un signal audio reçu produit par un ou des microphones du boîtier décodeur ;
- déterminer si un signal résultant, représentatif d'une différence entre le signal audio reçu et le signal audio émis, est inférieur à un seuil prédéterminé ;
- si c'est le cas, en déduire que le boîtier décodeur est bien la source HDMI active du téléviseur.

On propose de plus un procédé de détection tel que précédemment décrit, le boîtier décodeur intégrant un module d'annulation d'écho, le signal résultant étant un signal de sortie du module d'annulation d'écho.

On propose de plus un procédé de détection tel que précédemment décrit, dans lequel, si le téléviseur n'est pas allumé et/ou si le boîtier décodeur n'est pas la source HDMI active du téléviseur, la première commande et/ou la deuxième commande sont transmises à une télécommande du boîtier décodeur pour que celle-ci produise une première commande secondaire pour allumer le téléviseur et/ou une deuxième commande secondaire pour que le boîtier décodeur devienne la source HDMI active du téléviseur.

On propose de plus un procédé de détection tel que précédemment décrit, dans lequel la télécommande est agencée pour commander le téléviseur via un lien infrarouge, le procédé de détection comprenant en outre les étapes d'acquérir un premier code infrarouge et/ou un deuxième code infrarouge et de transmettre à la télécommande le premier code infrarouge et/ou le deuxième code infrarouge, le premier code infrarouge étant utilisé par la télécommande pour produire la première commande secondaire et le deuxième code infrarouge étant utilisé par la télécommande pour produire la deuxième commande secondaire.

On propose de plus un procédé de détection tel que précédemment décrit, dans lequel l'acquisition du premier code infrarouge et/ou du deuxième code infrarouge consiste à accéder à un EDID du téléviseur, ou à acquérir une information d'identification du téléviseur fournie par un utilisateur via un menu de configuration du boîtier décodeur, ou à acquérir une information d'identification du téléviseur fournie par l'utilisateur via une procédure de paramétrage réalisée avec la télécommande.

On propose de plus un boîtier décodeur comprenant un port HDMI, au moins un microphone, et une unité de traitement agencée pour mettre en œuvre le procédé de détection tel que précédemment décrit.

On propose de plus un programme d'ordinateur comprenant des instructions qui conduisent l'unité de traitement du boîtier décodeur tel que précédemment décrit à exécuter les étapes du procédé de détection tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés parmi lesquels :
[Fig. 1] la figure 1 représente un téléviseur, un boîtier décodeur et une télécommande ;
[Fig. 2] la figure 2 représente le téléviseur, le boîtier décodeur et un utilisateur ;
[Fig. 3] la figure 3 représente des étapes du procédé de détection selon l'invention, dans le cas où le téléviseur est compatible avec le protocole CEC ;
[Fig. 4] la figure 4 représente des étapes du procédé de détection selon l'invention, dans le cas où le téléviseur n'est pas compatible avec le protocole CEC ;
[Fig. 5] la figure 5 représente des étapes d'un processus de négociation HDCP.

### DESCRIPTION DETAILLEE DE L'INVENTION

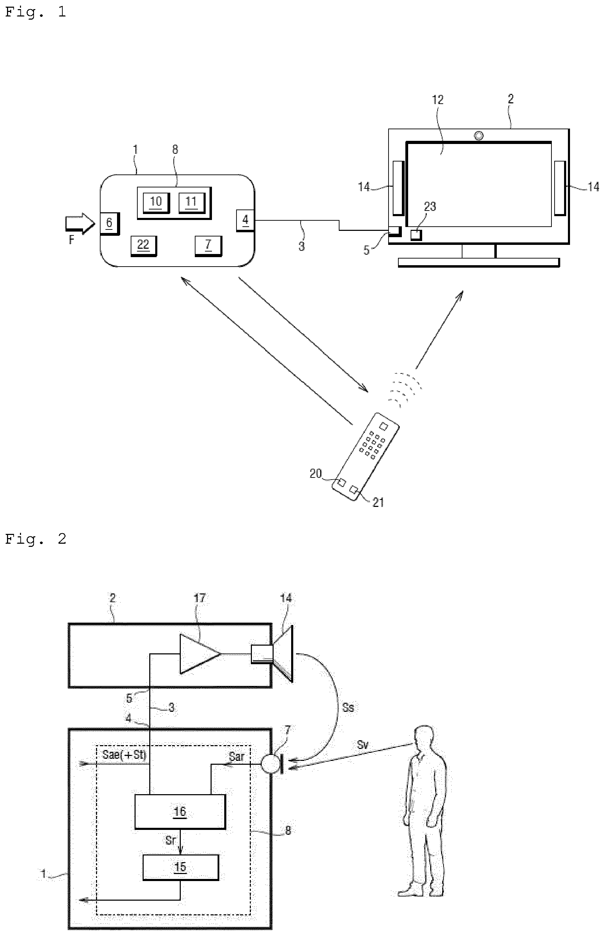

En référence à la figure 1, un boîtier décodeur 1 est connecté à un téléviseur 2 via un câble HDMI 3 (pour *High Definition Multimedia Interface*). Le câble HDMI 3 relie un port HDMI 4 du boîtier décodeur 1 à un port HDMI 5 du téléviseur 2.

Le boîtier décodeur 1 comprend de plus un port d'entrée 6, des microphones 7 et une unité de traitement 8.

L'unité de traitement 8 est une unité électronique et logicielle, comprenant un ou plusieurs composants de traitement 10 montés sur une ou plusieurs cartes électriques.

Le ou les composants de traitement 10 comprennent par exemple un processeur « généraliste », un processeur spécialisé dans le traitement du signal (ou DSP, pour *Digital Signal Processor*), un microcontrôleur, ou bien un circuit logique programmable tel qu'un FPGA (pour *Field Programmable Gate Arrays*) ou un ASIC (pour *Application Specific Integrated Circuit*). Les composants de traitement 10 sont adaptés à exécuter des instructions de programmes. L'unité de traitement 8 comprend aussi une ou des mémoires 11 dans lesquelles sont stockés les programmes. L'invention n'est pas limitée à une architecture particulière de l'unité de traitement 8.

L'unité de traitement 8 met en œuvre une pluralité de modules fonctionnels.

L'unité de traitement 8 met tout d'abord en œuvre, classiquement, un module de décodage et un module de synchronisation.

Le boîtier décodeur 1 peut recevoir via son port d'entrée 6 un flux de transport F de signaux de télévision numérique (ou TS, pour *Transport Stream*). Le flux de transport F peut être transmis au boîtier décodeur 1 par câble, par satellite, mais aussi via une liaison IP (par exemple DASH ou HLS), c'est-à-dire via une liaison qui utilise un protocole Internet.

Le flux de transport F comporte un flux vidéo comprenant des échantillons vidéo, et un flux audio comprenant des échantillons audio.

Le module de décodage décode les échantillons vidéo et les échantillons audio. Le module de synchronisation synchronise les échantillons vidéo et les échantillons audio.

L'unité de traitement 8 transmet alors au téléviseur 2, via le port HDMI 4, le câble HDMI 3 et le port HDMI 5, un signal audio émis (comprenant les échantillons audio) et un signal vidéo émis (comprenant les échantillons vidéo).

Le téléviseur 2 restitue alors un signal vidéo sur son écran 12, et un signal sonore via ses haut-parleurs 14.

L'unité de traitement 8 met aussi en œuvre, partiellement, une fonction de reconnaissance vocale.

Lorsque l'utilisateur prononce un signal vocal comprenant un mot-clef, ce signal vocal est capturé par les microphones 7 du boîtier décodeur 1, qui transmet le signal audio à des serveurs distants via Internet. Les serveurs distants analysent le signal audio et transmettent des commandes contenues dans le signal audio au boîtier décodeur 1, qui effectue alors les actions correspondant aux commandes vocales. L'analyse des signaux audio pour en extraire les commandes vocales n'est donc pas réalisée dans le boîtier décodeur 1, ce qui explique pourquoi on considère que la fonction de reconnaissance vocale n'est que partiellement réalisée dans le boîtier décodeur 1.

Pour réaliser cette fonction, et en référence à la figure 2, l'unité de traitement 8 comporte ici un module de détection 15 et un module d'annulation d'écho 16.

Le rôle du module de détection 15 est de détecter le mot-clef dans le signal vocal Sv émis par l'utilisateur et capturé par les microphones 7 du boîtier décodeur 1.

Le rôle du module d'annulation d'écho 16 est le suivant.

Il est possible que, lorsque l'utilisateur prononce le signal vocal Sv, le téléviseur 2 soit en train de restituer un signal sonore Ss. Ce signal sonore Ss résulte possiblement d'un signal audio émis Sae, produit par le boîtier décodeur 1 et transmis par le boîtier décodeur 1 au téléviseur 2 via le port HDMI 4, le câble HDMI 3 et le port HDMI 5. Le signal audio émis Sae est appliqué en entrée d'un amplificateur 17 puis des haut-parleurs 14 du téléviseur 2, qui produit ainsi le signal sonore Ss.

Dans ce cas, les microphones 7 du boîtier décodeur 1 capturent à la fois le signal vocal Sv émis par l'utilisateur et le signal sonore Ss émis par les haut-parleurs 14 du téléviseur 2, ce qui dégrade la qualité de la reconnaissance vocale.

Le module d'annulation d'écho 16 acquiert donc le signal audio émis Sae et le signal audio reçu Sar produit par les microphones 7 (qui contient le signal sonore Ss et le signal vocal Sv). Le module d'annulation d'écho retranche au signal audio reçu Sar le signal audio émis Sae pour fournir un signal résultant Sr « nettoyé », aussi proche que possible du signal vocal Sv (et ne contenant par le signal sonore Ss). C'est ce signal résultant Sr qui est transmis au module de détection 15 pour détection du mot-clef, et aux serveurs distants pour réaliser la reconnaissance vocale.

L'unité de traitement 8 est aussi agencée pour mettre en œuvre le procédé de détection selon l'invention. La mémoire 11 forme un support d'enregistrement lisible par ordinateur, sur lequel est enregistré un programme d'ordinateur comprenant des instructions qui conduisent l'unité de traitement 8 à exécuter les étapes du procédé de détection selon l'invention.

Le procédé de détection vise à assurer que, lorsqu'un mot-clé est prononcé par l'utilisateur dans le but de lancer la fonction de reconnaissance vocale, le téléviseur 2 est bien allumé et le boîtier décodeur 1 est bien la source HDMI active du téléviseur 2.

Par « allumé », on entend que le téléviseur 2 n'est ni éteint ni en veille.

Par « source HDMI active », on entend que le téléviseur 2 est configuré pour lire et restituer le signal vidéo émis et/ou le signal audio émis possiblement présents sur le port HDMI 5 (et donc transmis par le boîtier décodeur 1 via le port HDMI 4 et le câble HDMI 3) - et non pour lire ou restituer des signaux produits par une autre source.

Si ces conditions sont vérifiées, l'utilisateur peut bénéficier d'un retour utilisateur lors de la mise en œuvre de la fonction de reconnaissance vocale. Ce retour est réalisé par l'intermédiaire du téléviseur 2 : il peut donc s'agir d'un retour sonore (utilisant les haut-parleurs 14 du téléviseur 2) et/ou d'un retour visuel (utilisant l'écran 12 du téléviseur 2).

Comme l'utilisateur peut bénéficier d'un retour, la fonction de reconnaissance vocale peut être mise en œuvre, et le signal résultant Sr est transmis par le boîtier décodeur 1 aux serveurs distants.

Le procédé de détection est donc mis en œuvre suite à l'acquisition (et à la détection) du mot-clé par le module de détection 15.

L'unité de traitement 8 vérifie donc que le téléviseur 2 est allumé et, si ce n'est pas le cas, produit une première commande pour allumer le téléviseur 2. Puis, l'unité de traitement 8 vérifie que le boîtier décodeur 1 est bien la source HDMI active du téléviseur 2 et, si ce n'est pas le cas, produit une deuxième commande pour que le boîtier décodeur 1 devienne la source HDMI active du téléviseur 2. Lorsque le téléviseur 2 est allumé et que le boîtier décodeur 1 est la source HDMI active du téléviseur 2, le téléviseur 2 est disponible pour fournir un retour sonore et/ou visuel à l'utilisateur.

Dans ce cas, l'unité de traitement 8 produit une requête pour démarrer la fonction de reconnaissance vocale. La requête consiste ici à transmettre le signal résultant Sr aux serveurs distants via Internet.

L'unité de traitement 8 vérifie tout d'abord si le téléviseur 2 est compatible avec le protocole CEC (pour *Consumer Electronic Control*).

Le protocole CEC fonctionne de la manière suivante.

Le protocole CEC échange, sur un bus connecté à tous les ports HDMI du téléviseur 2 (dont le port HDMI 5), un signal CEC. Le signal CEC est un signal bidirectionnel à bas débit (1Kbps) qui est commun à tous les équipements connectés au téléviseur 2.

L'architecture du signal CEC est relativement simple et se décompose comme suit :
- une séquence de *start* ;
- un *header block* dans lequel les adresses de la source et de la destination sont données ;
- un *data block* 1 qui contient un *opcode* (*l'opcode*, que l'on peut traduire par « code opération », spécifie l'opération à effectuer) ;
- un *data block* 2 qui contient un opérande et qui est optionnel en fonction de *l'opcode* envoyé (l'opérande est l'élément sur lequel s'applique l'opération).

Le *header block,* le *data block 1* et le *data block 2* sont tous les trois codés sur 10 bits dont 8 utiles, 1 bit EOM (pour *End Of Message*) et 1 bit d'acquittement.

Dès qu'un nouvel équipement, compatible avec le protocole CEC, est connecté dans la chaîne HDMI, une adresse physique lui est attribuée en fonction de son rang par rapport au téléviseur 2.

Une fois que l'adresse physique est attribuée, l'équipement lancera une séquence d'allocation d'adresse logique. Son adresse logique est attribuée en priorité en fonction du rôle de l'équipement dans la chaîne HDMI (amplificateur, *tuner,* enregistreur, etc...). L'association entre l'adresse physique et l'adresse logique de l'équipement est diffusée sur toute la chaîne CEC via *l'opcode* < Report Physical Adress >.

Il existe un grand nombre *d'opcodes* définis dans la norme, dont certains pouvant déterminer l'état des équipements sur la chaîne CEC, comme par exemple les opcodes *« Report Power Status »* et « *Request Active Source ».*

Si le téléviseur 2 est compatible avec le protocole CEC, l'unité de traitement 8 utilise donc le protocole CEC pour vérifier que le téléviseur 2 est allumé et que le boîtier décodeur 1 est bien la source HDMI active du téléviseur 2, et, si nécessaire, pour produire la première commande et la deuxième commande.

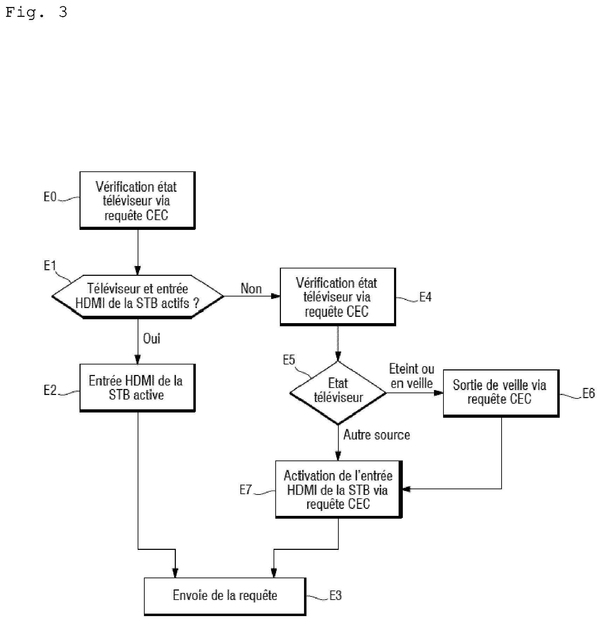

En référence à la figure 3, si le téléviseur 2 est compatible avec le protocole CEC, le procédé débute par une étape de départ E0. L'unité de traitement 8 vérifie, via une première requête CEC, si la condition combinée suivante est réalisée : le téléviseur 2 est allumé et la source HDMI active du téléviseur 2 est le boîtier décodeur 1 (étape E1).

Si c'est le cas, aucune action supplémentaire n'est nécessaire. L'unité de traitement 8 considère que le port HDMI 5 du téléviseur 2, relié au port HDMI 4 du boîtier décodeur 1, est activé (c'est-à-dire que le boîtier décodeur 1 est la source HDMI active) : étape E2. Le boîtier décodeur 1 émet alors la requête pour démarrer la fonction de reconnaissance vocale (c'est-à-dire transmet le signal résultant Sr aux serveurs distants) : étape E3.

Si ce n'est pas le cas, l'unité de traitement 8 produit une deuxième requête CEC (étape E4) pour obtenir l'état du téléviseur 2 (étape E5).

Si le téléviseur 2 est en veille, l'unité de traitement 8 produit une première commande, via une troisième requête CEC, pour sortir le téléviseur 2 de l'état de veille (étape E6) .

A l'étape E5, si le téléviseur 2 est allumé, l'unité de traitement 8 considère que la source HDMI active du téléviseur 2 n'est pas le boîtier décodeur 1.

Suite à l'étape E5 ou à l'étape E6, l'unité de traitement 8 produit une deuxième commande, via une quatrième requête CEC, pour activer le port HDMI 5 et donc pour que le boîtier décodeur 1 devienne la source HDMI active du téléviseur 2 : étape E7.

Le boîtier décodeur 1 émet alors la requête pour démarrer la fonction de reconnaissance vocale : étape E3.

Cependant, tous les téléviseurs ne sont pas compatibles avec le protocole CEC. Si le téléviseur 2 ne supporte pas la fonction CEC, l'unité de traitement 8 du boîtier décodeur 1 devra utiliser un procédé de détection en deux parties, en déterminant tout d'abord si le téléviseur 2 est allumé, puis en vérifiant ensuite quelle est sa source active.

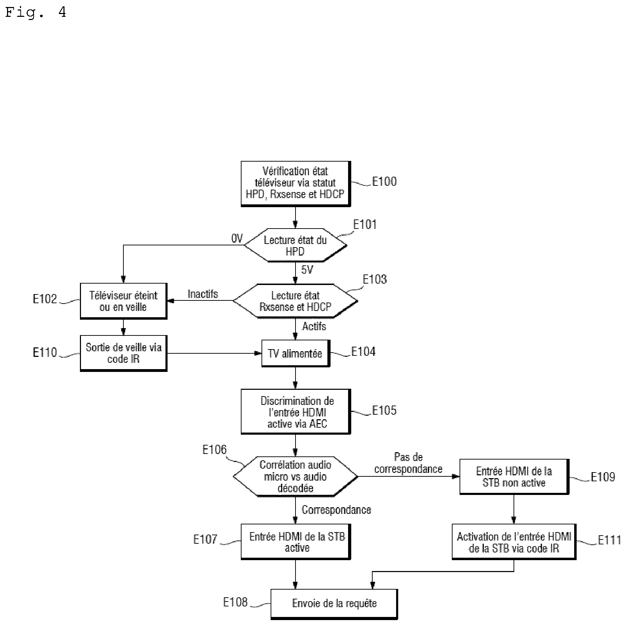

En référence à la figure 4, l'unité de traitement 8 met donc en œuvre un procédé alternatif utilisant un signal HPD (pour *Hot Plug Detection*), puis un signal RXSense appartenant aux signaux TMDS (pour *Transition Minimized Differential Signaling*) et/ou un signal généré par un protocole HDCP (pour *High-bandwidth Digital Content Protection*). Le procédé débute par une étape de départ E100.

L'unité de traitement 8 lit tout d'abord l'état du signal HPD (étape E101). Si celui-ci est dans un état bas (0V typiquement), l'unité de traitement 8 en déduit que le téléviseur 12 est éteint ou en veille (étape E102).

Si celui-ci est dans un état haut (5V typiquement), l'unité de traitement 8 lit l'état du signal RXSense et l'état du signal généré par le protocole HDCP (étape E103).

L'état du signal RXSense permet de détecter si le boîtier décodeur 1 envoie un signal vidéo et/ou un signal audio au téléviseur 2 et donc si le boîtier décodeur 1 est la source HDMI active du téléviseur 2.

Le HDCP est un procédé de chiffrement permettant de protéger les contenus audio/vidéo transitant via l'HDMI entre une source (ici le boîtier décodeur 1) et un récepteur (ici le téléviseur 2). Une fois l'authentification établie via un échange de clé de chiffrement, une requête *Link Integrity Check* est envoyée toutes les secondes à l'initiative du téléviseur 2 et doit être acquittée par le boîtier décodeur 1. Cette requête permet de vérifier que la synchronisation de chiffrement est maintenue entre le boîtier décodeur 1 et le téléviseur 2. Ainsi, le contenu envoyé par le boîtier décodeur 1 pourra être visualisé sur le téléviseur 2.

Lors de la mise en veille du téléviseur 2, celui-ci n'enverra plus de requête *Link Integrity Check.* L'absence de cette requête permet donc de statuer que le téléviseur 2 est en veille.

Le signal généré par le protocole HDCP, et utilisé ici, est donc la requête *Link Integrity Check.*

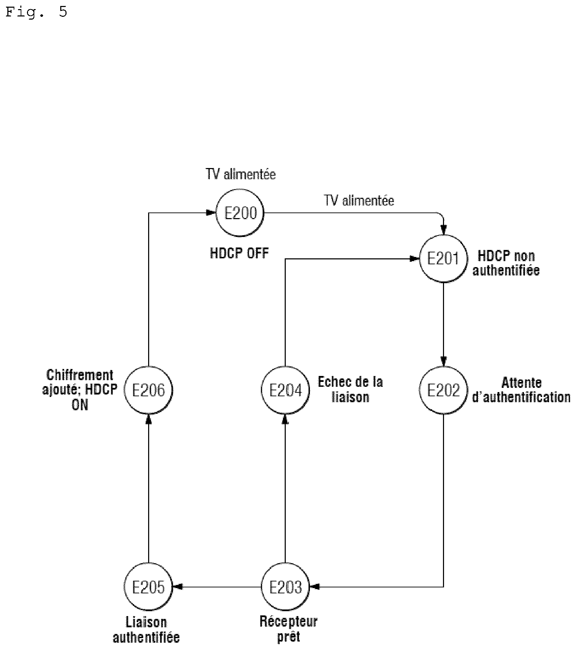

Le protocole de négociation HDCP est illustré sur la figure 5.

A l'étape E200, le téléviseur 2 est non alimenté (éteint) et le HDCP est inactif. Puis, le téléviseur 2 est alimenté (allumé), et le protocole passe à l'étape E201. Le HDCP n'est pas authentifié. Le protocole passe à l'étape E202, et attend l'authentification du boîtier décodeur 1. A l'étape E203, le boîtier décodeur 1 est prêt. A l'étape E204, la liaison a échoué et le protocole repasse à l'étape E201. A l'étape E205, la liaison n'échoue pas et le lien est authentifié. Le protocole passe à l'étape E206, au cours de laquelle le chiffrement est ajouté au flux, le HDCP est donc actif - jusqu'à l'extinction du téléviseur 2.

Ainsi, en revenant à la figure 4, à l'étape E103, si l'état du signal RxSense et si l'état du signal généré par le protocole HDCP sont inactifs, l'unité de traitement 8 en déduit que le téléviseur 2 est éteint ou en veille (étape E102) . Au contraire, si l'état du signal RxSense et si l'état du signal généré par le protocole HDCP sont actifs, l'unité de traitement 8 en déduit que le téléviseur est allumé (étape E104).

On note que l'on utilise ici à la fois le signal RXSense et le signal généré par le protocole HDCP pour détecter si le téléviseur 2 est allumé, ce qui permet de confirmer le résultat de la détection (et donc de la robustifier). Cela n'est cependant pas obligatoire, et un seul de ces deux signaux pourrait être utilisé.

Les étapes qui viennent d'être décrites permettent de déterminer si le téléviseur 2 est allumé ou éteint, mais ne permettent pas de savoir quelle source est restituée par le téléviseur 2. En effet, les téléviseurs laissent les signaux TMDS ainsi que le HDCP activés même si une autre entrée est affichée. Ceci a pour but de commuter instantanément d'une entrée à l'autre sans passer par les longues phases d'authentification.

Ainsi, suite à l'étape E104, il convient de déterminer si le boîtier décodeur 1 est ou non la source HDMI active du téléviseur 2.

Pour cela, l'unité de traitement 8 utilise le module d'annulation d'écho 16 qui a été décrit précédemment.

L'unité de traitement 8 émet sur le port HDMI 4 un signal audio émis Sae intégrant un signal de test St, et transmet le signal audio émis Sae au téléviseur 2 via le port HDMI 4, le câble HDMI 3 et le port HDMI 5 (étape E105). Cela signifie que, si le boîtier décodeur 1 est déjà en train de transmettre un signal audio émis Sae (c'est-à-dire par exemple un signal audio associé à un signal vidéo et provenant d'un flux TS), l'unité de traitement 8 introduit le signal de test St dans ledit signal audio émis Sae. Sinon, l'unité de traitement 8 envoie un signal audio émis Sae comprenant uniquement le signal de test St. Avantageusement, le signal de test St n'est pas audible par un être humain.

L'unité de traitement 8 acquiert alors le signal audio reçu Sar produit par les microphones 7 du boîtier décodeur 1.

L'unité de traitement 8 détermine alors si le signal résultant Sr, qui est représentatif d'une différence entre le signal audio reçu Sar et le signal audio émis Sae, est inférieur à un seuil prédéterminé (seuil statique) : étape E106. Si c'est le cas, l'unité de traitement 8 en déduit que le port HDMI 5 du téléviseur 2 est activé et que le boîtier décodeur 1 est bien la source HDMI active du téléviseur 2 (étape E107). L'unité de traitement 8 produit une requête pour démarrer la fonction de reconnaissance vocale (étape E108).

Au contraire, si ce n'est pas le cas, l'unité de traitement 8 en déduit que le port HDMI 5 n'est pas activé et que le boîtier décodeur 1 n'est pas la source HDMI active du téléviseur 2 (étape E109).

Suite à l'étape E102, c'est-à-dire si le téléviseur 2 n'est pas allumé, l'unité de traitement 8 produit la première commande et la transmet à une télécommande 18 du boîtier décodeur 1 (étape E110) pour que celle-ci produise une première commande secondaire pour allumer le téléviseur 2 (étape E104). La télécommande 18 est visible sur la figure 1.

De même, suite à l'étape E109, si le boîtier décodeur 1 n'est pas la source HDMI active du téléviseur 2, l'unité de traitement 8 produit la deuxième commande et la transmet à la télécommande 18 pour que celle-ci produise une deuxième commande secondaire pour que le boîtier décodeur 1 devienne la source HDMI active du téléviseur 2 (étape E111).

La télécommande 18 comprend un module de communication radiofréquence 20 et un module de communication infrarouge 21. Le boîtier décodeur 1 comprend un module de communication radiofréquence 22. Le téléviseur 2 comprend un module de communication infrarouge 23.

Le boîtier décodeur 1 et la télécommande 18 peuvent donc communiquer via les modules de communication radiofréquences 20, 22. La liaison radiofréquence est une liaison bidirectionnelle Bluetooth BLE (pour *Bluetooth Low Energy).* La communication entre le boîtier décodeur 1 et la télécommande 18 se fera selon la méthode GATT (pour *Generic Attribute Profile).*

On note que d'autres protocoles bidirectionnels sont possibles pour faire communiquer le boîtier décodeur 1 et la télécommande 18, comme par exemple le ZigBee (profil RF4CE) .

L'unité de traitement 8 acquiert tout d'abord, selon que le procédé se trouve à l'étape E102 ou E109, un premier code infrarouge ou un deuxième code infrarouge, le premier code infrarouge étant utilisé par la télécommande 18 pour produire la première commande secondaire et le deuxième code infrarouge étant utilisé par la télécommande 18 pour produire la deuxième commande secondaire.

Pour acquérir le premier code infrarouge et le deuxième code infrarouge, le boîtier décodeur 1 accède à un EDID (pour *Extended Display Identification Data*) du téléviseur 2.

L'EDID est un tableau stocké dans chaque téléviseur HDMI, contenant son identification ainsi que la liste de tous les formats vidéo et audio supportés. Ce tableau est obligatoirement lu puis stocké dans le boîtier décodeur 1 à chaque sortie de veille du téléviseur 2 et/ ou du boîtier décodeur 1. L'EDID permet notamment de connaitre le fabricant et le modèle du téléviseur 2, et donc d'en déduire (via une table de correspondance) les codes infrarouges à utiliser. Le plus souvent, la connaissance du fabricant du téléviseur suffit pour déterminer le code infrarouge approprié.

Alternativement, pour connaître les codes infrarouges, l'unité de traitement 8 pourrait acquérir une information d'identification du téléviseur 2 fournie par un utilisateur via un menu de configuration du boîtier décodeur 1, ou bien pourrait acquérir une information d'identification du téléviseur 2 fournie par l'utilisateur via une procédure de paramétrage réalisée avec la télécommande 18.

L'unité de traitement 8 du boîtier décodeur utilise donc la télécommande 18, normalement dédiée à la commande du boîtier décodeur 1, pour agir sur le téléviseur 2 de manière à allumer celui-ci ou à activer le port HDMI 5.

Ainsi, à l'étape E110, l'unité de traitement 8 envoie la première commande, qui est une commande propriétaire, à la télécommande 18 en utilisant le lien Bluetooth BLE. La télécommande 18 utilise le premier code infrarouge pour produire la première commande secondaire qui allume le téléviseur 2. Le procédé passe alors à l'étape E104.

De même, à l'étape E111, l'unité de traitement 8 envoie la deuxième commande, qui est une commande propriétaire, à la télécommande 18 en utilisant le lien Bluetooth BLE. La télécommande 18 utilise le deuxième code infrarouge pour produire la deuxième commande secondaire, par laquelle le boîtier décodeur 1 devient la source HDMI active du téléviseur 2. Le procédé passe alors à l'étape E108.

On note que, consécutivement au réveil du téléviseur 2, le boîtier décodeur 1 pourrait soit activer la fonction de reconnaissance vocale et envoyer l'intention vocale aux serveurs distants, soit re-procéder à la détection de l'état du téléviseur 2 avant d'éventuellement activer la fonction de reconnaissance vocale.

Bien entendu, l'invention n'est pas limitée au mode de réalisation décrit mais englobe toute variante entrant dans le champ de l'invention telle que définie par les revendications.

On a décrit ici que la fonction de reconnaissance vocale n'est que partiellement mise en œuvre dans le boîtier décodeur. Cependant, le boîtier décodeur pourrait mettre en œuvre entièrement la fonction de reconnaissance vocale ; dans ce cas, le signal résultant n'est pas transmis à des serveurs distants.

La requête pour démarrer la fonction de reconnaissance vocale ne consiste donc pas nécessairement à transmettre le signal résultant, mais pourrait être de nature différente, par exemple une simple commande d'activation.

## Revendications

1. Procédé de détection, mis en œuvre dans un boîtier décodeur (1) comprenant un port HDMI (4) connecté via un câble HDMI (3) à un téléviseur (2), le procédé de détection étant réalisé préalablement à la mise en œuvre d'une fonction de reconnaissance vocale sur un signal vocal (Sv) prononcé par un utilisateur et capturé par le boîtier décodeur,
le procédé de détection comprenant les étapes de :
- vérifier que le téléviseur (2) est allumé et, si ce n'est pas le cas, produire une première commande pour allumer le téléviseur ;
- vérifier que le boîtier décodeur (1) est une source HDMI active du téléviseur et, si ce n'est pas le cas, produire une deuxième commande pour que le boîtier décodeur devienne la source HDMI active du téléviseur ;
- lorsque le téléviseur est allumé et que le boîtier décodeur est la source HDMI active du téléviseur, produire une requête pour démarrer la fonction de reconnaissance vocale.

2. Procédé de détection selon la revendication 1, comprenant en outre les étapes de vérifier que le téléviseur (2) est compatible avec un protocole CEC et, si c'est le cas, d'utiliser le protocole CEC pour vérifier que le téléviseur est allumé et que le boîtier décodeur est la source HDMI active du téléviseur, et, si nécessaire, pour produire la première commande et/ou la deuxième commande.

3. Procédé de détection selon l'une des revendications précédentes, comprenant l'étape, pour vérifier que le téléviseur (2) est allumé, d'utiliser un signal HPD, puis un signal RXSense et/ou un signal généré par un protocole HDCP.

4. Procédé de détection selon l'une des revendications précédentes, comprenant les étapes, pour vérifier que le boîtier décodeur (1) est la source HDMI active du téléviseur (1), de :
- émettre via le port HDMI (4) un signal audio émis (Sae) comprenant un signal de test (St) ;
- acquérir un signal audio reçu (Sar) produit par un ou des microphones (7) du boîtier décodeur ;
- déterminer si un signal résultant (Sr), représentatif d'une différence entre le signal audio reçu (Sar) et le signal audio émis (Sae), est inférieur à un seuil prédéterminé ;
- si c'est le cas, en déduire que le boîtier décodeur est bien la source HDMI active du téléviseur.

5. Procédé de détection selon la revendication 4, le boîtier décodeur intégrant un module d'annulation d'écho (16), le signal résultant (Sr) étant un signal de sortie du module d'annulation d'écho (16).

6. Procédé de détection selon l'une des revendications précédentes, dans lequel, si le téléviseur n'est pas allumé et/ou si le boîtier décodeur n'est pas la source HDMI active du téléviseur, la première commande et/ou la deuxième commande sont transmises à une télécommande (18) du boîtier décodeur pour que celle-ci produise une première commande secondaire pour allumer le téléviseur et/ou une deuxième commande secondaire pour que le boîtier décodeur devienne la source HDMI active du téléviseur.

7. Procédé de détection selon la revendication 6, dans lequel la télécommande (18) est agencée pour commander le téléviseur (2) via un lien infrarouge, le procédé de détection comprenant en outre les étapes d'acquérir un premier code infrarouge et/ou un deuxième code infrarouge et de transmettre à la télécommande le premier code infrarouge et/ou le deuxième code infrarouge, le premier code infrarouge étant utilisé par la télécommande pour produire la première commande secondaire et le deuxième code infrarouge étant utilisé par la télécommande pour produire la deuxième commande secondaire.

8. Procédé de détection selon la revendication 7, dans lequel l'acquisition du premier code infrarouge et/ou du deuxième code infrarouge consiste à accéder à un EDID du téléviseur, ou à acquérir une information d'identification du téléviseur fournie par un utilisateur via un menu de configuration du boîtier décodeur, ou à acquérir une information d'identification du téléviseur fournie par l'utilisateur via une procédure de paramétrage réalisée avec la télécommande.

9. Boîtier décodeur comprenant un port HDMI (4), au moins un microphone (7), et une unité de traitement (8) agencée pour mettre en œuvre le procédé de détection selon l'une des revendications précédentes.

10. Programme d'ordinateur comprenant des instructions qui conduisent l'unité de traitement du boîtier décodeur selon la revendication 9 à exécuter les étapes du procédé de détection selon l'une des revendications 1 à 8.

11. Support d'enregistrement lisible par ordinateur, sur lequel est enregistré le programme d'ordinateur selon la revendication 10.
